# EUROPEAN PATENT APPLICATION

(11) **EP 4 616 835 A1**
(43) Date of publication of application: **17.09.2025**
(21) Application number: 23881439.6
(22) Date of filing: 28.08.2023
(51) Int. Cl.: A61G 5/04

(54) **MOVABLE SEAT, POWER-ASSISTED CONTROL METHOD THEREOF AND DEVICE WITH STORAGE FUNCTION**

(30) Priority: 26.10.2022 CN 202211316747
(71) Applicant: Zhejiang Zubu Medical Technology Co., Ltd, Taizhou, Zhejiang 317317 (CN)
(72) Inventor: DIAO, Jian, Guangzhou, Guangdong 510535 (CN); GONG, Mao, Guangzhou, Guangdong 510535 (CN)
(74) Representative: Pons IP
(86) International application number: PCT/CN2023/115151
(87) International publication number: WO 2024/087857

(57) **Abstract**

The present disclosure discloses a movable seat, a power-assisted control method thereof, and a device with a storage function. The power-assisted control method for the movable seat includes obtaining a first rotational speed of a wheel body of the movable seat at the current moment, calculating a first preset driving force required for the movable seat to operate at the first rotational speed, and sending to a driver a drive signal of operating at the first preset driving force. It can automatically perform power-assisted compensation for the movable seat, making it easier to push the movable seat or simpler to control the movable seat, and it can avoid sudden acceleration, deceleration, or excessive acceleration or deceleration caused by improper user control, with higher safety. At the same time, it makes the movable seat more automated and intelligent.

## Description

### TECHNICAL FIELD

The present disclosure relates to the technical field of medical devices, and particularly to a movable seat and a power-assisted control method thereof, and a device with a storage function.

### BACKGROUND

The movable seat includes a vehicle body and a wheel body that are rotatably connected, and the movement of the vehicle body is realized through the rolling of the wheel body. An ordinary movable seat needs the assistance of others to realize the movement function. When the user needs to go out alone or the weight of the vehicle body and the user is relatively large, the manual method will bring a lot of inconvenience.

At present, the movable seat can generally be driven to move by means of a motor, so that the user can still use the movable seat normally when it is inconvenient to move the movable seat manually. However, the driving force of the motor is generally manually controlled by the controller on the movable seat. It is easy for the user to control it improperly, resulting in sudden acceleration or deceleration, or excessive acceleration or deceleration, which poses a safety hazard and has a low degree of automation.

### SUMMARY

The present disclosure provides a movable seat and a power-assisted control method thereof, and a device with a storage function to solve the technical problem of inconvenient control of the electric movable seat in the prior art.

The present disclosure provides a movable seat and a power-assisted control method thereof, and a device with a storage function to solve the technical problem of inconvenient control of the electric movable seat in the prior art.

To solve the above technical problems, a technical solution adopted by the present disclosure is to provide a power-assisted control method for a movable seat, including the following steps of:
obtaining a first rotational speed of a wheel body of the movable seat at a current moment;
calculating a first preset driving force required for the movable seat to operate at the first rotational speed; and
sending to a driver a drive signal of operating at the first preset driving force.

In a specific embodiment, after the step of obtaining a first rotational speed of a wheel body of the movable seat at a current moment, the method further includes:
determining a motion state of the movable seat according to the first rotational speed, wherein the motion state includes a forward state, a reverse state, and a stop state; and
calculating the first preset driving force according to the motion state.

In a specific embodiment, a method for determining the motion state of the movable seat according to the first rotational speed V0 includes:
if the first rotational speed V0 is greater than or equal to the first preset speed V1 , where V1 is greater than 0, then the movable seat being in the forward state;
if the first rotational speed V0 is less than or equal to the second preset speed V2, where V2 is less than 0, then the movable seat being in the reverse state; and
if the first rotational speed V0 is equal to 0, then the movable seat being in the stop state.

In a specific embodiment, a method for calculating the first preset driving force F1 according to the motion state includes:
if the movable seat is in the forward state, then F1=m1*|V0|+Fp , where m1 is greater than or equal to 0, Fp is greater than or equal to 0, m1 is a proportional value corresponding to the first rotational speed V0 , Fp is a preset forward fixed driving force, and F1 is a forward driving force;
if the movable seat is in the reverse state, then \(F1=m2*|~V0|+Fb\), where m2 is greater than or equal to 0, Fb is greater than or equal to 0, m2 is a proportional value corresponding to the first rotational speed V0 , Fb is a preset inverse fixed driving force, and F1 is a reverse driving force; and
if the movable seat is in the stop state, then \(F1=0\).

In a specific embodiment, the motion state of the movable seat may further includes a low-speed state, wherein if an absolute value |V0| of the first rotational speed is greater than 0 and less than a third preset speed V3 , then the movable seat is in the low-speed state.; and if the movable seat is in the low-speed state, then \(F1=m0*|~V0|+Ft\) , where Ft is greater than or equal to 0, m0 is greater than or equal to 0, Ft is a preset fixed driving force; and if V0 is greater than 0, then F1 is the forward driving force; and if V0 is less than 0, then F1 is the reverse driving force; and
the first preset driving force obtained when the movable seat is in the low-speed state is less than the first preset driving force obtained when the movable seat is in the forward state and/or the reverse state.

In a specific embodiment, after the step of obtaining a first rotational speed of a wheel body of the movable seat at a current moment, the method further includes:
obtaining an acceleration of the wheel body of the movable seat;
calculating a second preset driving force required for the movable seat to operate at a second rotational speed at a next moment, wherein the second rotational speed is obtained by accelerating the first rotational speed with the acceleration; and
sending to the driver a drive signal of operating at the first preset driving force and/or the second preset driving force.

In a specific embodiment, the step of a second preset driving force required for the movable seat to operate at a second rotational speed at a next moment includes:
calculating a speed variation between the current moment and the next moment;
determining a speed change state of the movable seat according to the speed variation; and
calculating the second preset driving force according to the speed change state.

In a specific embodiment, the steps of calculating the speed variation, determining the speed change state, and calculating the second preset driving force specifically include:
calculating the speed variation \(\DeltaV=a*(t1-t0)\)) between the current moment and the next moment, where a is the acceleration, t1 is the next moment, and t0 is the current moment; wherein
if the speed variation ΔV is equal to 0, then the speed change state is a constant-speed state, and the second preset driving force is \(F2=0\) ;
if the speed variation ΔV is greater than 0, then the speed change state is an acceleration state, and the second preset driving force is \(F2=k1*|\DeltaV|\)F2=k1*|ΔV| , where k1 is greater than or equal to 0, k1 , k1 is a proportional value corresponding to the speed variation ΔV in the acceleration state, and F2 is the forward driving force; and
if the speed variation ΔV is less than 0, then the speed change state is a deceleration state, and the second preset driving force is \(F2=k2*|\DeltaV|\) , where k2 is greater than or equal to 0, k2 is a proportional value corresponding to the speed variation ΔV in the deceleration state, and F2 is the reverse driving force.

In a specific embodiment, after the step of obtaining a first rotational speed of a wheel body of the movable seat at a current moment, the method further includes:
obtaining the second rotational speed at the next moment; and
determining a speed change state of the movable seat according to the first rotational speed and the second rotational speed, wherein the speed change state includes a constant-speed state, an acceleration state, and a deceleration state; wherein
if the speed change state is the acceleration state or the deceleration state, it is determined whether the speed change state changes within a preset time after the next moment; and
if the speed change state changes within the preset time after the next moment, a drive signal of operating with the driving force before the current moment is sent to the driver.

To solve the above technical problems, one technical solution adopted by the present disclosure is to provide a movable seat, including:
a vehicle body;
a wheel body rotatably connected to the vehicle body;
a driver, a driving end of which is connected to the wheel body and is configured to drive the wheel body to rotate;
a processor that is connected to the driver and is configured for obtaining a first rotational speed of the wheel body of the movable seat at a current moment; calculating a first preset driving force required for the movable seat to operate at the first rotational speed; and sending to the driver a drive signal of operating at the first preset driving force.

To solve the above technical problems, one technical solution adopted by the present disclosure is to provide a device with a storage function, in which program data are stored, wherein the program data are executable to implement the above control method.

The power-assisted control method for the movable seat of the present disclosure includes obtaining the first rotational speed of the wheel body of the movable seat at the current moment, calculating the first preset driving force required for the movable seat to operate at the first rotational speed, and sending a drive signal to the driver to operate with the first preset driving force. It can automatically perform power-assisted compensation for the movable seat, making it easier to push the movable seat or simpler to control the movable seat, and it can avoid sudden acceleration or deceleration caused by improper user control, or excessive acceleration or deceleration, with higher safety. At the same time, it makes the movable seat more automated and more intelligent.

### BRIEF DESCRIPTION OF DRAWINGS

The drawings, which form a part of this application, are used to provide a further understanding of the present disclosure. The schematic embodiments of the present disclosure and the descriptions thereof are used to explain the present disclosure and do not constitute an improper limitation of the present disclosure. In the drawings:
FIG. 1 is a schematic flowchart of an embodiment of the power-assisted control method for the movable seat of the present disclosure;
FIG. 2 is a schematic flowchart of another embodiment of the power-assisted control method for the movable seat of the present disclosure;
FIG. 3 is a schematic flowchart of another embodiment of the power-assisted control method for the movable seat of the present disclosure;
FIG. 4 is a schematic flowchart of another embodiment of the power-assisted control method for the movable seat of the present disclosure;
FIG. 5 is a schematic perspective view of an embodiment of the movable seat of the present disclosure;
FIG. 6 is a schematic cross-sectional view of an embodiment of the movable seat of the present disclosure;
FIG. 7 is a schematic structural view of an embodiment of the device with a storage function of the present disclosure.

### DESCRIPTION OF EMBODIMENTS

The technical solution in the embodiment of the present disclosure will be clearly and completely described below with reference to the drawings. Obviously, the described embodiment is part of, rather than all of the embodiments of the present disclosure. The following description of at least one exemplary embodiment is illustrative in nature and is in no way intended to limit the present disclosure, its application or uses. Based on the embodiments in the present disclosure, all other embodiments obtained by those skilled in the art without creative work belong to the scope of protection of the present disclosure.

It should be noted that the terminology used here is only for describing specific embodiments, and is not intended to limit exemplary embodiments according to the present application. As used herein, the singular form is also intended to include the plural form unless the context clearly indicates otherwise. Furthermore, it should be appreciated that when the terms "comprising" and/or "including" are used in this specification, they specify the presence of features, steps, operations, devices, components and/or combinations thereof.

Unless otherwise specified, the relative arrangement of components and steps, numerical expressions and numerical values set forth in these embodiments do not limit the scope of the present disclosure. At the same time, it should be appreciated that for the convenience of description, the dimensions of various parts shown in the drawings are not drawn according to the actual scale relationship. Techniques, methods and equipment known to those skilled in the art may not be discussed in detail, but in appropriate cases, they should be regarded as part of the authorization specification. In all the examples shown and discussed herein, any specific values should be interpreted as illustrative, and not as limiting. Therefore, other examples of exemplary embodiments may have different values. It should be noted that similar numbers and letters indicate similar items in the following drawings, therefore once an item is defined in one drawing, it does not need to be further discussed in subsequent drawings.

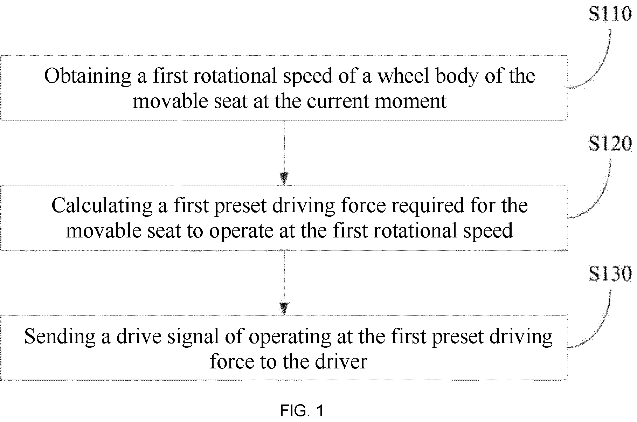

Referring to FIG. 1, an embodiment of the power-assisted control method for the movable seat of the present disclosure includes:
S110, a first rotational speed of a wheel body of the movable seat at the current moment is obtained.

In this embodiment, the first current rotational speed can be obtained by setting a speed detector on the wheel body, the vehicle body of the movable seat or the driver.

S120, a first preset driving force required for the movable seat to operate at the first rotational speed is calculated.

In this embodiment, it is to calculate the first preset driving force of the driver corresponding to the movable seat reaching the first rotational speed.

In this embodiment, the preset driving force can be calculated according to the formula relationship between the driving force and the rotational speed.

In other embodiments, the corresponding relationship between the driving force and the rotational speed of the wheel body can also be pre-stored. During previous movement processes, the corresponding relationship between the driving force and the rotational speed of the wheel body is calculated and stored, so that the preset driving force can be directly obtained according to the corresponding relationship, thereby improving the reaction speed.

S130, a drive signal of operating at the first preset driving force is sent to the driver.

In this embodiment, the driver operates at the first preset driving force. Due to errors in structure and signal transmission, the actual rotational speed of the wheel body may not be equal to the first rotational speed. However, the error between the actual rotational speed of the wheel body and the first rotational speed can be made less than the preset error value, and power-assist compensation can be automatically performed for the movable seat, making it easier to push the movable seat or simpler to control the movable seat. It can prevent sudden acceleration or deceleration caused by improper user control, or excessive acceleration or deceleration, with higher safety. At the same time, it makes the movable seat more automated and intelligent.

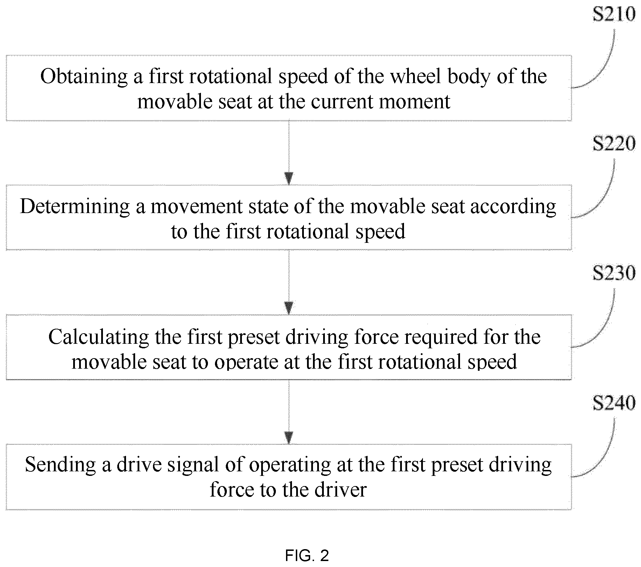

Referring to FIG. 2, another embodiment of the power-power-assisted control method for the movable seat of the present disclosure includes:
S210, a first rotational speed of the wheel body of the movable seat at the current moment is obtained.

In this embodiment, the first rotational speed can be directly detected through speed detection.

In other embodiments, the first rotational speed can also be indirectly detected through other methods such as image detection and distance detection, which are not limited here.

S220, a movement state of the movable seat according to the first rotational speed is determined.

In this embodiment, the movement states include a forward state, a reverse state, and a stop state.

In this embodiment, when the wheel body rotates forward, the value of the first rotational speed is defined as a positive value. When the wheel body rotates backward, the value of the first rotational speed is defined as a negative value. The method for determining the movement state of the movable seat according to the first rotational speed V0 may specifically include:
S221, if V0 of the first rotational speed is greater than or equal to the first preset speed V1, where V1 is greater than 0, the movable seat is in the forward state.
S222, if V0 of the first rotational speed is less than or equal to the second preset speed V2, where V2 is less than 0, the movable seat is in the reverse state.
S223, if the first rotational speed V0 is equal to 0, the movable seat is in the stop state.

In other embodiments, the movement state of the movable seat can also be detected through other methods such as image detection and distance detection, which are not limited here.

S230, the first preset driving force required for the movable seat to operate at the first rotational speed is calculated according to the movement state.

In this embodiment, by calculating the first preset driving force according to the movement state, the calculation result can be more accurate and more reliable.

In this embodiment, when the movable seat moves forward, the rotation direction of the wheel body is defined as the forward direction, and the driving force acting on the wheel body is the forward driving force. When the movable seat moves backward, the rotation direction of the wheel body is the reverse direction, and the driving force acting on the wheel body is the reverse driving force.

In this embodiment, the method for calculating the first preset driving force F1 according to the motion state may specifically include:
S231, if the movable seat is in the forward state, then \(F1 = m1*|~V0| + Fp \), where m1 is greater than or equal to 0, Fp is greater than or equal to 0, m1 is the proportional value corresponding to the first rotational speed V0 , Fp is the preset forward fixed driving force, and F1 is the forward driving force;
S232, if the movable seat is in the reverse state, then \(F1 = m2*|~V0| + Fb \), where m2 is greater than or equal to 0, Fb is greater than or equal to 0, m2 is the proportional value corresponding to the first rotational speed V0 , Fb is the preset inverse fixed driving force, and F1 is the reverse driving force;
S233, if the movable seat is in the stop state, then \(F1 = 0 \). In this embodiment, m1 and m2 can be 1, 1.5, or 2, etc.; Fp can be equal to the friction force that needs to be overcome when the movable seat moves forward at a constant speed; Fb can be equal to the friction force that needs to be overcome when the movable seat moves backward at a constant speed; the values of m1 , Fp , m2 , and Fb can be set before leaving the factory, can also be set by the user, or can be automatically calculated by the processor based on the data collected during previous use.
S240, a drive signal of operating at the first preset driving force is sent to the driver.

In this embodiment, the motion state of the movable seat may also include a low-speed state. If the absolute value of the first rotational speed |V0| is greater than 0 and less than the third preset speed V3 , then the movable seat is in the low-speed state. If the movable seat is in the low-speed state, then \(F1 = m0*|~V0| + Ft \), where Ft is greater than or equal to 0, m0 is greater than or equal to 0, Ft is the preset fixed driving force. If V0 is greater than 0, then F1 is the forward driving force. If V0 is less than 0, then F1 is the reverse driving force.

In this embodiment, m0 can be 1, 1.5, 2, etc. Ft can be equal to the friction force that needs to be overcome when the movable seat moves forward or backward at a constant speed. The values of m0 and Ft can be set before leaving the factory, or can be set by the user themselves, or can be automatically calculated by the processor based on the data collected during previous use.

In this embodiment, the first preset driving force obtained when the movable seat is in the low-speed state is less than the first preset driving force obtained when the movable seat is in the forward state and/or the reverse state.

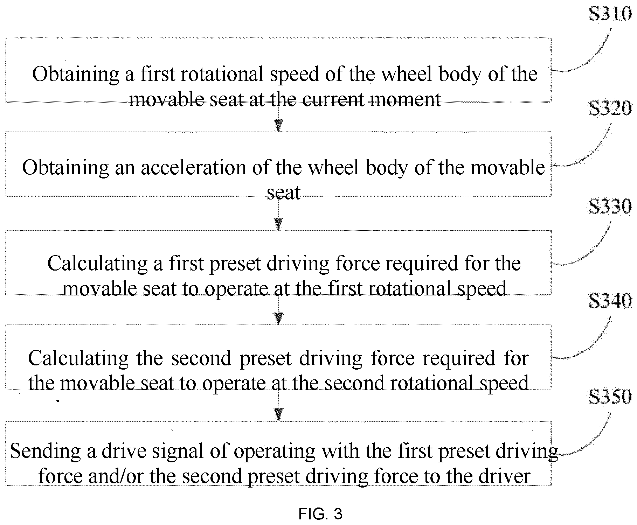

Referring to FIG. 3, another embodiment of the power-assisted control method for the movable seat of the present disclosure includes:
S310, a first rotational speed of the wheel body of the movable seat at the current moment is obtained.

In this embodiment, the first rotational speed can be directly detected through speed detection.

In other embodiments, the first rotational speed can also be indirectly detected through other methods such as image detection and distance detection, which is not limited here.

S320, an acceleration of the wheel body of the movable seat is obtained.

In this embodiment, the acceleration of the wheel body can be calculated based on the first rotational speed of the wheel body at the current moment and the rotational speed of the wheel body at the previous moment.

S330, a first preset driving force required for the movable seat to operate at the first rotational speed is calculated.

S340, the second preset driving force required for the movable seat to operate at the second rotational speed at the next moment is calculated.

In this embodiment, the second rotational speed is obtained by accelerating the first rotational speed with the acceleration.

In this embodiment, calculating the second preset driving force required for the movable seat to operate at the second rotational speed at the next moment may specifically include:
8S341, the speed variation between the current moment and the next moment is calculated.
S342, the speed change state of the movable seat according to the speed variation id determined.

In this embodiment, the speed change state includes the constant-speed state, the acceleration state, and the deceleration state.

S343, a second preset driving force is calculated according to the speed change state.

In this embodiment, by calculating the second preset driving force based on the speed change state, the calculation result can be more accurate and more reliable.

In this embodiment, calculating the speed variation, judging the speed change state, and calculating the second preset driving force may specifically include:
S361, the speed variation ΔV=a*(t1\(\DeltaV=a*(t1-t0)\)) between the current moment and the next moment is calculated, where a is the acceleration, t1 is the next moment, and t0 is the current moment.
S362, if the speed variation \(\DeltaV\) is equal to 0, the speed change state is the constant-speed state, and the second preset driving force \(F2=0\) :
S363, if the speed variation \(\DeltaV\) is greater than 0, the speed change state is the acceleration state, and the second preset driving force \(F2=k1*|\)ΔV|, where k1 greater than or equal to 0, k1 is the proportional value corresponding to the speed variation ΔV in the acceleration state, and F2 is the forward driving force.
S364, if the speed variation \(\DeltaV\) is less than 0, the speed change state is the deceleration state, and the second preset driving force is \(F2=k2*\)\(\DeltaV|\)ΔV| , where k2 is greater than or equal to 0, and k2 is a proportional value corresponding to the speed variation ΔV in th deceleration state, and F2 is the reverse driving force.

In this embodiment, k1, k2 can be 1, 2, 3, etc. The values of k1 and k2 can be set before leaving the factory, can also be set by the user themselves, or can be automatically calculated by the processor based on the data collected during previous use.

S350, a drive signal of operating with the first preset driving force F1 and/or the second preset driving force F2 is sent to the driver.

In this embodiment, the driving force of the driver can be \ (F = F1 + F2\), which can provide sufficient driving force for the movable seat to overcome the resistance generated by the first rotational speed and acceleration operation.

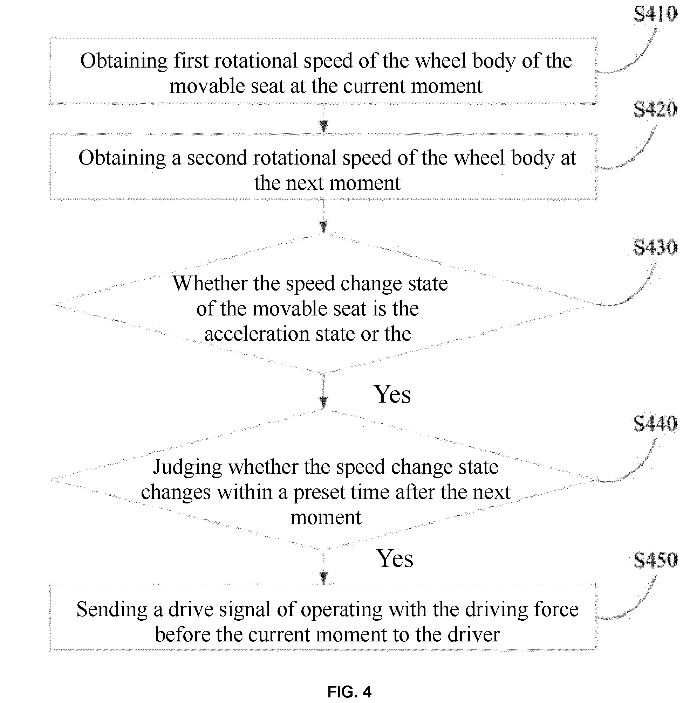

Referring to FIG. 4, an embodiment of the power-assisted control method for the movable seat of the present disclosure includes:
S410, a first rotational speed of the wheel body of the movable seat at the current moment is obtained.

In this embodiment, the first rotational speed can be directly detected through speed detection.

In other embodiments, the first rotational speed can also be indirectly detected through other methods such as image detection and distance detection, which is not limited here.

S420, a second rotational speed of the wheel body at the next moment is obtained.

In this embodiment, the second rotational speed is the actual rotational speed obtained through detection.

S430, whether the speed change state of the movable seat is the acceleration state or the deceleration state is determined based on the first rotational speed and the second rotational speed.

In this embodiment, the speed change states include the constant-speed state, the acceleration state, and the deceleration state.

S440, if the speed change state is the acceleration state or the deceleration state, whether the speed change state changes within a preset time after the next moment is determined.

In this embodiment, if the speed change state is the acceleration state and it changes to the constant-speed state or the deceleration state within the preset time after the next moment, then the speed change state has changed; otherwise, it has not changed. If the speed change state is the deceleration state and it changes to the constant-speed state or the acceleration state within the preset time after the next moment, then the speed change state has changed; otherwise, it has not changed.

In this embodiment, if the speed change state is the constant-speed state, there is no need to determine whether the speed change state changes within the preset time after the next moment.

S450, if the speed change state changes within the preset time after the next moment, a drive signal of operating with the driving force before the current moment is sent to the driver.

In this embodiment, if the speed change state does not change within the preset time after the next moment, continue to assist the movable seat in the original speed change state.

Specifically, when the movable seat is on running planes with different surface frictions at the current moment and the next moment, for example, the movable seat is on the grass at the current moment with a large resistance and a slow first rotational speed, and it moves to the cement ground at the next moment with a smaller resistance and a faster second rotational speed, then the speed change state is the acceleration state. At this time, the user pushing the movable seat will pull the movable seat or control it through the controller to slow it down to avoid excessive speed, and the speed change state will change to the deceleration state within the preset time after the next moment. This situation indicates that the acceleration from the current moment to the next moment is not what the user wants. Therefore, send a drive signal to the driver to operate with the driving force before the current moment, so that the movable seat can run at the speed at the current moment (i.e., the original speed of the movable seat on the grass), making the power-assist control of the movable seat more intelligent.

Specifically, when the movable seat is on planes with different slopes at the current moment and the next moment, for example, the movable seat is on a horizontal plane at the current moment, and moves to a downhill plane at the next moment. The speed of the movable seat increases under the action of gravity, so the speed change state is the acceleration state. At this time, the user pushing the movable seat will pull the movable seat or control the movable seat through the controller to decelerate it, so as to avoid excessive speed. The speed change state within the preset time after the next moment will become the deceleration state. This situation indicates that the acceleration from the current moment to the next moment is not what the user wants. Therefore, a drive signal to operate with the driving force before the current moment is sent to the driver, so that the movable seat can operate at the speed at the current moment (that is, the original speed of the movable seat on the horizontal plane), making the power-assisted control of the movable seat more intelligent.

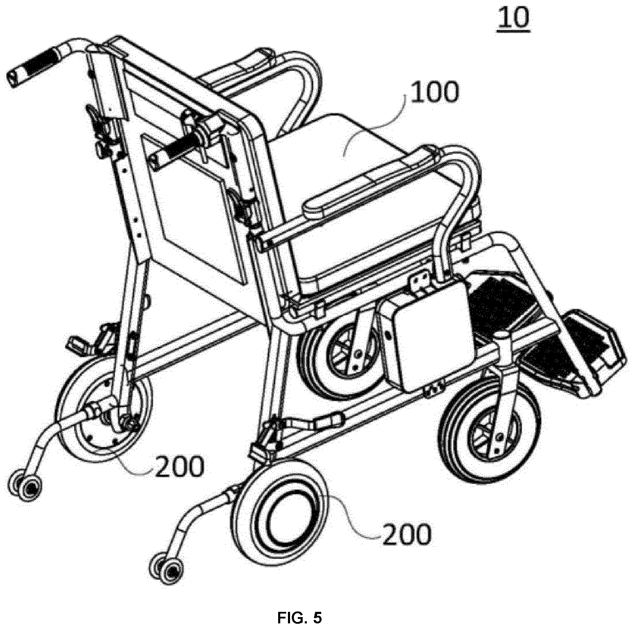

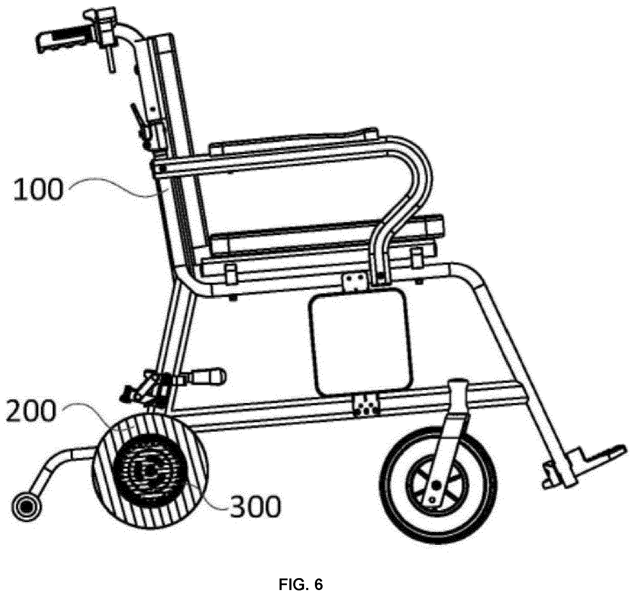

Referring to FIGS. 5 and 6, the embodiment of the movable seat 10 of the present disclosure includes a vehicle body 100, a wheel body 200, a driver 300, and a processor (not shown). The wheel body 200 is rotatably connected to the vehicle body 100. The driving end of the driver 300 is connected to the wheel body 200 for driving the wheel body 200 to rotate. The processor is connected to the driver 300 for obtaining the first rotational speed of the wheel body 200 of the movable seat 10 at the current moment, calculating the first preset driving force required for the movable seat 10 to operate at the first rotational speed, and sending a drive signal to the driver 300 to operate with the first preset driving force. This embodiment can automatically perform power-assisted compensation for the movable seat 10, making it easier to push the movable seat 10 or simpler to control the movable seat 10. It can avoid sudden acceleration or deceleration caused by improper user control, or excessive acceleration or deceleration, with higher safety. At the same time, it makes the movable seat 10 more automated and intelligent.

In this embodiment, the movable seat 10 can be a device for assisting the user to move, such as a wheelchair, a trolley, or a walking aid.

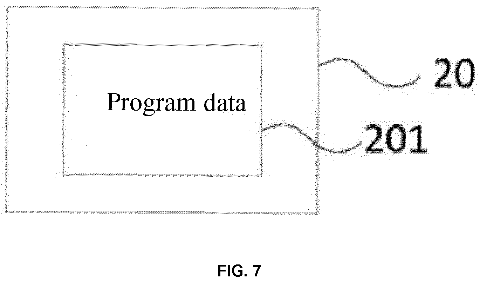

Referring to FIG. 7, the embodiment of the device 20 with storage function of the present disclosure stores program data 201. The program data 201 can be executed to implement the above control method.

Specifically, refer to the above embodiment of the power-assisted control method for the movable seat for the power-assisted control method of the movable seat, which will not be repeated here. This embodiment can automatically perform power-assisted compensation for the movable seat, making it easier to push the movable seat or simpler to control the movable seat. It can avoid sudden acceleration or deceleration caused by improper user control, or excessive acceleration or deceleration, with higher safety. At the same time, it makes the movable seat more automated and intelligent.

In this embodiment, the device 20 with storage function can specifically be a medium that can store program instructions, such as a U disk, a removable hard drive, a Read-Only Memory (ROM), a Random Access Memory (RAM), a magnetic disk, or an optical disc. Alternatively, it can be a server storing these program instructions. This server can send the stored program instructions to other devices for execution, or it can execute the stored program instructions by itself.

The above descriptions are merely preferred embodiments of the present disclosure and are not intended to limit the present disclosure. For those skilled in the art, the present disclosure may have various modifications and changes. Any modification, equivalent replacement, improvement, etc. made within the spirit and principle of the present disclosure shall be included in the protection scope of the present disclosure.

## Claims

1. A power-assisted control method for a movable seat, comprising the following steps of:
obtaining a first rotational speed of a wheel body of the movable seat at a current moment;
calculating a first preset driving force required for the movable seat to operate at the first rotational speed; and
sending to a driver a drive signal of operating at the first preset driving force.

2. The control method according to claim 1, wherein
after the step of obtaining a first rotational speed of a wheel body of the movable seat at a current moment, the method further comprises:
determining a motion state of the movable seat according to the first rotational speed, wherein the motion state comprises a forward state, a reverse state, and a stop state; and
calculating the first preset driving force according to the motion state.

3. The control method according to claim 2, wherein
a method for determining the motion state of the movable seat according to the first rotational speed V0 comprises:
if the first rotational speed V0 is greater than or equal to the first preset speed V1 , where V1 is greater than 0, then the movable seat being in the forward state;
if the first rotational speed V0 is less than or equal to the second preset speed V2, where V2 is less than 0, then the movable seat being in the reverse state; and
if the first rotational speed V0 is equal to 0, then the movable seat being in the stop state.

4. The control method according to claim 2, wherein
a method for calculating the first preset driving force F1 according to the motion state comprises:
if the movable seat is in the forward state, then F1=m1*|V0|+Fp , where m1 is greater than or equal to 0, Fp is greater than or equal to 0, m1 is a proportional value corresponding to the first rotational speed V0 , Fp is a preset forward fixed driving force, and F1 is a forward driving force;
if the movable seat is in the reverse state, then F1=m2*|V0|+Fb, where m2 is greater than or equal to 0, Fb is greater than or equal to 0, m2 is a proportional value corresponding to the first rotational speed V0 , Fb is a preset inverse fixed driving force, and F1 is a reverse driving force; and
if the movable seat is in the stop state, then F1 = 0 .

5. The control method according to claim 1, wherein
the motion state of the movable seat further comprises a low-speed state, wherein if an absolute value |V0| of the first rotational speed is greater than 0 and less than a third preset speed V3 , then the movable seat is in the low-speed state.; and if the movable seat is in the low-speed state, then F1=m0*|V0|+Ft, where Ft is greater than or equal to 0, m0 is greater than or equal to 0, Ft is a preset fixed driving force; and if V0 is greater than 0, then F1 is the forward driving force; and if V0 is less than 0, then F1 is the reverse driving force; and
the first preset driving force obtained when the movable seat is in the low-speed state is less than the first preset driving force obtained when the movable seat is in the forward state and/or the reverse state.

6. The control method according to claim 1, wherein
after the step of obtaining a first rotational speed of a wheel body of the movable seat at a current moment, the method further comprises:
obtaining an acceleration of the wheel body of the movable seat;
calculating a second preset driving force required for the movable seat to operate at a second rotational speed at a next moment, wherein the second rotational speed is obtained by accelerating the first rotational speed with the acceleration; and
sending to the driver a drive signal of operating at the first preset driving force and/or the second preset driving force.

7. The control method according to claim 6, wherein
the step of a second preset driving force required for the movable seat to operate at a second rotational speed at a next moment comprises:
calculating a speed variation between the current moment and the next moment;
determining a speed change state of the movable seat according to the speed variation; and
calculating the second preset driving force according to the speed change state.

8. The control method according to claim 7, wherein
the steps of calculating the speed variation, determining the speed change state, and calculating the second preset driving force specifically comprise:
calculating the speed variation ΔV=a* (t1-t0) between the current moment and the next moment, where a is the acceleration, t1 is the next moment, and t0 is the current moment; wherein
if the speed variation ΔV is equal to 0, then the speed change state is a constant-speed state, and the second preset driving force is F2 = 0 ;
if the speed variation ΔV is greater than 0, then the speed change state is an acceleration state, and the second preset driving force is F2=k1*|ΔV|, where k1 is greater than or equal to 0, k1 , k1 is a proportional value corresponding to the speed variation ΔV in the acceleration state, and F2 is the forward driving force; and
if the speed variation ΔV is less than 0, then the speed change state is a deceleration state, and the second preset driving force is F2=k2*|ΔV| , where k2 is greater than or equal to 0, k2 is a proportional value corresponding to the speed variation ΔV in the deceleration state, and F2 is the reverse driving force.

9. The control method according to claim 1, wherein
after the step of obtaining a first rotational speed of a wheel body of the movable seat at a current moment, the method further comprises:
obtaining the second rotational speed at the next moment; and
determining a speed change state of the movable seat according to the first rotational speed and the second rotational speed, wherein the speed change state comprises a constant-speed state, an acceleration state, and a deceleration state; wherein
if the speed change state is the acceleration state or the deceleration state, it is determined whether the speed change state changes within a preset time after the next moment; and
if the speed change state changes within the preset time after the next moment, a drive signal of operating with the driving force before the current moment is sent to the driver.

10. A movable seat, comprising:
a vehicle body;
a wheel body rotatably connected to the vehicle body;
a driver, a driving end of which is connected to the wheel body and is configured to drive the wheel body to rotate;
a processor that is connected to the driver and is configured for obtaining a first rotational speed of the wheel body of the movable seat at a current moment;
calculating a first preset driving force required for the movable seat to operate at the first rotational speed; and
sending to the driver a drive signal of operating at the first preset driving force.

11. A device with a storage function, in which program data are stored, wherein the program data are executable to implement the control method as described in claim 1.
